# EUROPEAN PATENT APPLICATION

(11) **EP 1 619 837 A1**
(43) Date of publication of application: **25.01.2006**
(21) Application number: 04291845.8
(22) Date of filing: 19.07.2004
(51) Int. Cl.: H04L 12/56

(54) **Method for optimizing resource allocation in a telecommunication system including multiple local networks such as an ad-hoc system**

(71) Applicant: Mitsubishi Electric Information Technology Centre Europe B.V., 1119 NS Schiphol Rijk (NL); MITSUBISHI DENKI KABUSHIKI KAISHA, Tokyo 100-8310 (JP)
(72) Inventor: Seguin, Laure, CS 10806 35708 Rennes Cédex 7 (FR)
(74) Representative: Saint-Marc-Etienne, Christophe Andréas

(57) **Abstract**

The present invention relates to a method for transmitting information in a telecommunication system comprising multiple local networks, which information is to be transmitted within at least one frame FRk (fot k=1 to K).

The method according to the invention includes a section creation step for generating at least one section to be included in a given frame, e.g. FR1, which section includes multiple slots, e.g. SLT32, each slot being allocated to a given terminal for enabling said terminal to transmit information.

The invention enables a terminal to identify itself simply by transmitting said information within the slot allocated to said terminal.

## Description

The present invention relates to a method for transmitting information in a telecommunication system comprising multiple local networks, which information is to be transmitted within at least one frame.

Such methods are currently used in various types of telecommunications systems. Such systems may be of a so-called cellular type, which are closely controlled by a system infrastructure, or may be of a so-called ad-hoc type, which are relatively loosely controlled by a system infrastructure, much of the management of an ad-hoc system being distributed among local controllers included each in a local network. Though such a distributed management allows high flexibility and modularity, which in turn enable an ad-hoc system to adapt itself to changing operating conditions, and in particular to varying workloads, each local controller usually performs its own managing operations with little or no knowledge of operating conditions prevailing in other, and particularly adjacent local networks. Hence, in the known state of the art of ad-hoc telecommunication systems, interference problems between communications involving terminals located in neighbouring local networks may arise, which is in principle not the case in cellular systems, in which all the information relevant to management operations is centralized in the system infrastructure, at the cost of huge control information traffic and loss of flexibilty.

Flexible communication of control information between active terminals in ad-hoc systems is thus called for, in order to prevent changes of throughput related to a given communication from interfering with other already established communications, while such communication of control information should represent as little additional traffic as possible.

According to one of its aspects, the invention aims at solving the aforementioned problem, by providing a method for transmitting information related to operating conditions of any given terminal without requiring transmission of an explicit identification code of said terminal.

Indeed, a method according to the opening paragraph is characterized according to the invention in that it includes a section creation step for generating at least one section to be included in the information frame, which section is splitted into multiple slots, each slot being allocated to a given terminal for enabling said terminal to transmit information in the form of a signal positioned within said slot.

The invention enables a terminal to identify itself simply by transmitting said information within the slot allocated to said terminal. This allows implicit addressing of a transmitting terminal by a receiving terminal, as opposed to explicit addressing which would require transmission of specific address data and would thus entail an increase of communication traffic. As will be explained hereinafter, such an implicit adressing scheme also enables an easy reply, by sending back a signal within the slot allocated to the original transmitting terminal, each terminal being then preferably required to continuously and systematically scrutinize its own allocated slot.

The signal to be positioned in a slot allocated to a given terminal may be simply constituted by a pulse generated by said terminal, but it may also consist in a series of pulses whose positions within their allocated slot are determined by bit values included in a predefined binary codeword specific to the code used for encoding said signal.

According to a particular embodiment of the invention, a method as described above further includes a code definition step for defining at least one code to be allocated to a given local network, all terminals included in said given network being intended to use said code for encoding information to be transmitted by said terminals.

The fact that each network possesses its own dedicated code will enable to multiply by the number of possible codes the size of the addressing space obtained by the above described slotting, since it may enable a receiver to determine, by identifying the code originally used, the respective origins of two different signals encoded according to different codes but sent within a same slot.

According to another particular embodiment of the invention, which may be used alternatively or cumulatively with the previous one, a method as described above further includes a power setting step for ensuring that all terminals included in the telecommunication system use a same nominal transmitting power.

The fact that all signals are originally transmitted with essentially a same power level will enable a receiver of such a signal to determine wether an original transmitter of said signal is located in its immediate surroundings or not, i.e. if said original transmitter belongs to the same local network or not, which in turn enriches the informational content of the signals transmitted according to this other embodiment of the invention. Furthermore, the use of a same nominal transmitting power for all transmitters included in a system gives to any receiver a knowledge of the original power of a received signal, and thus enables said receiver to quantify the gain of the communication channel through which said signal has been transmitted. Such a gain evaluation will in turn enable any receiver to quantify an interference level which would be generated by the original transmitter for any given transmitting throughput, and thus to assess the impact said original transmitter may have on a quality of service to be delivered by said receiver.

The uses of the implicit addressing defined hereinbefore are multiple. A specific application of the above described embodiments of the invention will now be more precisely described.

Indeed, as explained earlier, the invention may advantageously be used for preventing changes of throughput related to a given communication from interfering with other already established communications in an ad-hoc telecommunication system, without generating a prohibitive amount of control information.

Thus, according to another one of its aspects, the invention also relates to a method for allocating communication resources in a telecommunication system comprising multiple local networks, which method includes a connection step in the course of which communications are established between various terminals included in said system, a guaranteed minimal quality of service being associated to each communication, method further including a throughput increase anouncement step in the course of which at least one transmitting terminal anounces an imminent increase of throughput for the communication it supports, which anouncement is made by transmitting at least one frame section generated by said transmitting terminal by carrying out a section creation step as described hereinbefore.

Transmission of such a throughput increase anouncement will enable to broadcast that the throughput of a given communication will soon be increased, the transmitter of this anouncement being identifiable by the position of the slot the anouncement is actually transmitted in.

The throughput increase anouncement transmitted by the transmitting terminal preferably includes a first and a second frame section generated by said transmitting terminal by carrying out two successive section creation steps, in order to transmit a first flagging signal encoded according to a code allocated to the local network to which said transmitting terminal belongs, and a second flagging signal encoded according to a common code shared by all local networks.

The use of two different codes for encoding two successive flagging signals gives two degrees of freedom for possible interpretations of an incoming signal. For example, a receiver able to decode the successive first and second flagging signals will know that the original transmitter belongs to its own local network, whereas a receiver only able to decode the second flagging signal will know that the original transmitter belongs to another local network. This embodiment of the invention thus enriches the informational content of the receiving anouncement, by enabling a terminal to identify incoming signals transmitted on a same slot, though encoded according to different codes, which will indicate that said incoming signals were originally transmitted by terminals belonging to different local networks.

A method according to this other aspect will advantageously include a warning transmitting step in the course of which any third terminal having analysed said throughput increase anouncement and deduced from such an analysis that the related throughput increase imperils an ongoing communication involving said third terminal generates a warning frame section by carrying out at least one section creation step and transmitting a warning signal positioned in a slot allocated to the terminal from which the throughput increase anouncement originates.

Such a warning transmitting step allows any third terminal having judged that the imminent advertised throughput increase may disturb their ongoing communications to send reply to a terminal having originally broadcasted the throughput increase anouncement, without requiring said third terminal to actually determine a destination address for such a reply. The implicit addressing scheme thus allows very quick information exchanges, while additionnally saving computation resources, since no address encoding/decoding needs to be performed thanks to the invention.

In another embodiment of the aspect of the invention described above, the warning includes a first and a second frame section generated by said third terminal by carrying out two successive section creation steps, in order to transmit a first warning signal encoded according to the code allocated to the local network to which said third terminal belongs, and a second warning signal encoded according to a common code shared by all local networks.

The use of two different codes for encoding two successive warning signals gives two degrees of freedom for possible interpretations of an incoming signal, with the advantages already explained above.

According to a variant of the invention, a method as described above may further include a warning compiling step in the course of which all terminals to which a warning signal has been transmitted are identified and listed by order of nuisance in storage means included in the telecommunication system.

Such a compiling step may enable to harmonize the steps taken for optimizing the communication resources, by creating a sum of knowledge at system level which allows to identify those particular terminals which disturb the most the operation of the system. Such knowledge will then enable to act only on a limited number of terminals by reducing their throughput or, more generally, the quality of service unduly affected to said limited number of terminals, in order to enhance the operating conditions of all others.

According to another variant of the invention, a method as described above may further include a throughput resetting step in the course of which a terminal having issued a predetermined number of successive throughput increase anouncements without having actually increased said throughput to a given desired value performs a computation of a new desired value lower than said given desired value.

Such a resetting step will enable each terminal to discipline itself by allowing it to restrict its demands if it observes that these demands cannot realistically be met by the system.

The computation of a new desired value may for example be performed by reducing the given desired value by a predetermined ratio.

According to yet another one of its aspects, the invention also concerns a signal intended to carry an information frame including at least one section splitted into multiple slots, each slot being allocated to a given terminal for enabling said terminal to transmit a throughput increase anouncement while carrying out a method for allocating communication resources as described hereinbefore.

The characteristics of the invention mentioned above, as well as others, will emerge more clearly from a reading of the following description given in relation to the accompanying figures, amongst which:
Fig.1 is a schematic diagram depicting a telecommunication system in which the invention is embodied, and;
Fig.2 is a chronogram depicting frames including sections created by means of the invention and intended to be transmitted in the above system.

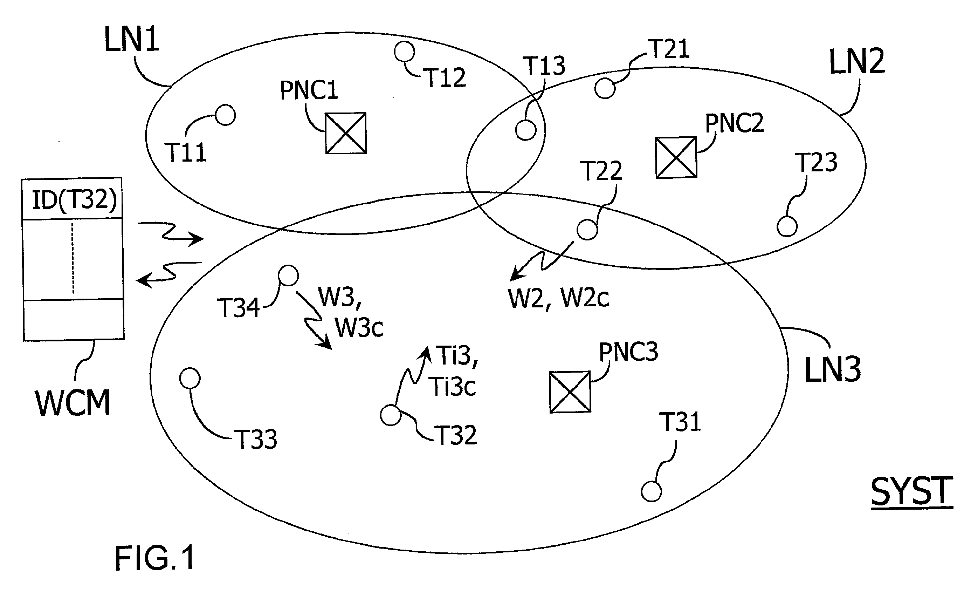

Fig.1 schematically represents an ad-hoc telecommunication system SYST comprising in this example three local networks LN1, LN2 and LN3 which are in fact piconets having each a maximal radius of roughly ten meters. Each local network LN1, LN2 or LN3 includes a piconet controller PNC1, PNC2 or PNC3, which is intended to manage the traffic exchanged within its piconet PNC1, PNC2 or PNC3 by terminals included therein (T11, T12, T13), (T21, T22, T23) or (T31, T32, T33 and T34), respectively.

The invention aims at allowing optimal regulation of the communications exchanged within such an ad-hoc system SYST, by preventing changes of throughput related to a given communication from interfering with already established communications, without generating a prohibitive amount of control information.

Thus, a method for allocating communication resources according to the present invention includes a connection step in the course of which communications are established between various terminals Tij (for i=1 to 3 and j=3, 3 and 4 respectively) included in said system SYST, a guaranteed minimal quality of service being associated to each communication, method further including a throughput increase anouncement step in the course of which at least one transmitting terminal anounces an imminent increase of throughput for the communication it supports, which enables to broadcast to all neighbouring terminals that a communication established in their vincinity may soon become more interferent, the transmitter of the throughput increase anouncement being identifiable by the position of the slot said anouncement is actually transmitted in.

In this example, terminal T32 sends a throughput increase anouncement (Ti3, Ti3c) in the form of a first flagging signal Ti3 encoded according to the code allocated to the local network LN3 to which said receiving terminal T32 belongs, followed by a second flagging signal Ti3c encoded according to a common code shared by all local networks LN1, LN2 and LN3.

Thanks to this aspect of the invention, a simple and direct identification of the potential nuisance constituted by terminal T32 is given by the position of the slots including the flagging signals Ti3 and Ti3c. All terminals judging that this future receiver T32 may disturb their ongoing communications may then send a reply to the terminal T32 in one or several slots normally allocated to said terminal T32.

The use of two different codes for encoding the two successive flagging signals Ti3 and Ti3c gives two degrees of freedom for possible interpretations of an incoming signal. For example, a receiver able to decode the successive first and second flagging signals Ti3 and Ti3c, like for example the terminal T34, will know that the future receiver T32 belongs to its own local network LN3, whereas a receiver only able to decode the second flagging signal Ti3c, like for example the terminal T22, will know that the future receiver T32 belongs to a local network other than its own. Furthermore, the use of different codes for different local networks will allow a terminal to receive and identify separate flagging signals transmitted by two separate terminals belonging to different local networks, even if said flagging signals are positioned in a same slot.

This embodiment of the invention thus enriches the informational content of the receiving anouncement, particularly if all transmitted signals are to be sent with a same transmitting power during the communication establishment phase. Actually, if a same terminal detects successive flagging signals having different power levels and/or different coding schemes, this terminal will be able to deduce from this fact that seperate terminals belonging to different local networks are about to initiate interfering communications, and may determine on the basis of each power level if said interfering communications pose a threat to a predefined quality level it is to provide for its own established communication.

It should be noted here that, in alternative embodiments of the invention, all terminals may include a code memory comprising a code table associating each code used in the telecommunication system SYST with a relevant network identification of the each local network said code is allocated to. In such alternative embodiments, any terminal transmitting a throughput increase anoucement (Ti3, Ti3c) may then include in said anouncement its own network identification, which will enable any receiver of such an anouncement to extract from its code table the relevant code allocated to the network the anouncement originates from, and thus to effectively decode all information included in said anouncement, and hence quantify even more precisely the threat posed by the planned throughput increase to ongoing communications as would be the case if, for example, said information were to explicit the desired increased throughput value.

A method as described above preferably also includes a warning transmitting step in the course of which terminals having analysed a throughput increase anoucement (Ti3, Ti3c), in this example terminals T22 and T34, generate respective warning signals (W3, W3c) and (W2, W2c), positioned in slots which should be allocated to the terminal T32 from which the throughput increase anouncement (Ti3, Ti3c) originates, in order to warn said terminal T32 that the announced throughput increase imperils ongoing communications.

Each warning includes a first warning signal W2 and W3 encoded according to the code allocated to the local network LN2 and LN3 to which its related terminal T22 and T34 belongs, and a second warning signal W2c and W3c encoded according to a common code shared by all local networks.

The system SYST may further include warning compiling means WCM for storing by order of nuisance all identifications of the terminals to which warning signals have been transmitted, e.g. ID(T32), said identifications being for example listed according to the number of times each listed terminal, e.g. T32, has been the object of a warning signal, e.g..

Such compiling means WCM may enable to harmonize steps taken for optimizing the communication resources, by creating a sum of knowledge at system level which allows to identify those particular terminals which disturb the most the operation of the system SYST. Such knowledge will then enable to act only on a limited number of terminals by reducing their throughput or, more generally, the quality of service unduly affected to said limited number of terminals, in order to enhance the operating conditions of all others.

Each terminal will preferably be required to continuously and systematically scrutinize its own allocated slot. The terminal T32 having originally requested a throughput increase will generally be able to analyse the contents of warning signals (W3, W3c) and (W2, W2c) whose generation has been triggered by the original transmission of its throughput increase anouncement (Ti3, Ti3c), and will thus be able to determine if said throughput increase should realistically be actually performed or not. On the basis of the findings of such an analysis, terminal T32 will either confirm or infirm its throughput increase. Following a confirmation by terminal T32, the throughput increase will be performed, whereas an infirmation will require terminal T32 to send a new throughput increase anouncement (Ti3, Ti3c) later if such an increase is still needed.

Each terminal may be provided with throughput resetting means (not shown) intended to be activated after transmission of a predetermined number of successive throughput increase anouncements, neither of which anouncements having been followed by an actual raise of the current throughput to a increased, desired value. Such throughput resetting means will then perform a computation of a new desired throughput value lower than said given desired value, and thus enable each terminal to discipline itself by allowing it to restrict its demands if it observes that these demands cannot realistically be met by the system SYST.

The computation of a new desired throughput value NDT may for example be performed by reducing the given desired value DT by a predetermined ratio, e.g. NDT=0.75×DT, or NDT=DT-25%.

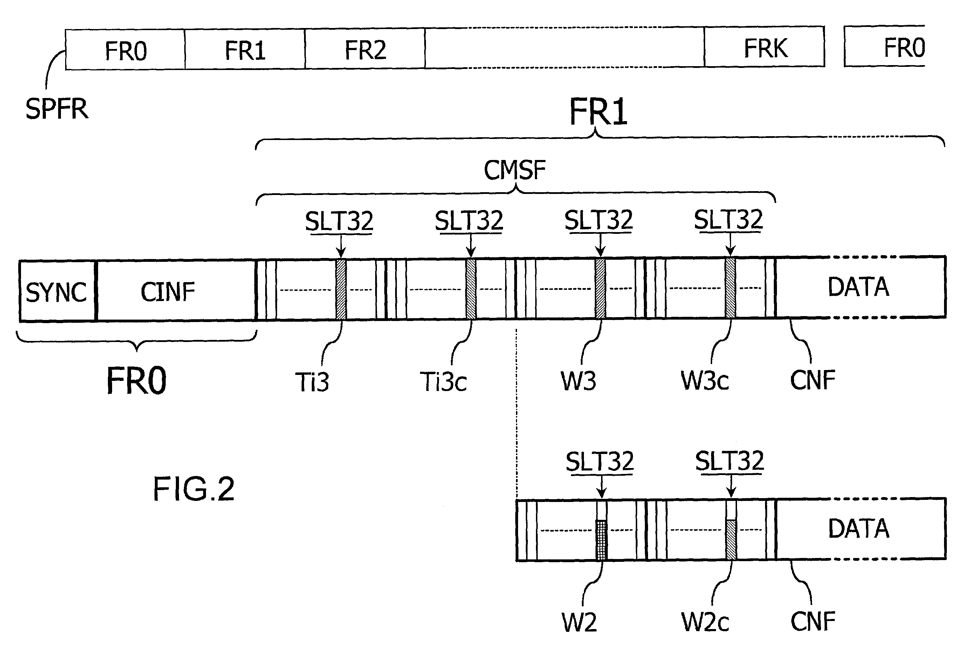

Fig.2 depicts various frames transmitted in the above-described ad-hoc telecommunication system. A superframe SPFR includes a connection establishment frame FR0 intended to include all control information necessary for managing connection requests, and communication frames (FR1...FRK) including each a communication management sub-frame CMSF intented to include control information necessary for performing a flexible resource management, and a data information subframes intended to carry data to be actually exchanged between terminals included in said telecommunication system.

The control information frame FRO includes a first section SYNC intended to carry beacons to be used by all terminals for synchronization purposes.

In a following section of control information frame FR0, control information CINF defines all parameters needed for performing new connections between various terminals included in the system, which parameters are representative of the quality of service, e.g. in terms of data throughput and bit error rate allocated to each communication to be established.

In two successive sections of a following communication management frame FR1, a given terminal T32 identified by its allocated slot SLT32 sends a throughput increase anouncement (Ti3, Ti3c) in the form of a first flagging signal Ti3 encoded according to the code allocated to the local network LN3 to which said terminal T32 belongs, followed by a second flagging signal Ti3c encoded according to a common code shared by all local networks, which first and second flagging signals are positioned in the slot SLT32 allocated to terminal T32.

Each flagging signal Ti3 and Ti3c may for example consist in a series of pulses whose positions within slot SLT32 are determined by bit values included in a predefined binary codeword specific to the code used for encoding the relevant flagging signal.

In two following sections of frame FR1, terminals T22 and T34, having analysed said throughput increase anouncement (Ti3, Ti3c) and deduced from such an analysis that the related throughput increase imperils ongoing communications, send warnings (W2, W2c) and (W3, W3c) in the form of first warning signals W2, W3 encoded according to the codes allocated to the local networks LN2 and LN3 to which said terminals T22, T34 belong, and second warning signals W2c, W3c encoded according to a common code shared by all local networks, which warning signals are positioned in the slots SLT32 allocated to the terminal T32 having originally issued the throughput increase anouncement (Ti3, Ti3c).

Each warning signal W2, W2c, W3 and W3c may for example consist in a series of pulses whose positions within slot SLT32 are determined by bit values included in a predefined binary codeword specific to the code used for encoding said warning signal.

It should be noted here that, if both terminals T22 and T34 simultaneously transmit warnings (W2, W2c) and (W3, W3c) in the same slots SLT32, terminal T32 won't be able to decode the first warning signal W2 transmitted by terminal T22 encoded according to its own code, i.e. the code specifically allocated to the local network LN2 to which terminal T22 belongs, except if terminal T22 has transmitted its own network identification and if terminal T32 includes a code table comprising the codes allocated to all local networks. However, terminal T32 will be able to decode the second warning signal W2c transmitted by terminal T22 encoded according to the common code, and thus be able to deduce form said second warning signal W2c that the throughput increase which terminal T32 is about to perform may disturb a terminal belonging to a neighbouring local network. This embodiment of the invention thus enables to spread control information from one network to another without requiring to centralize the management of said control information.

Furthermore, in the situation depicted here, the warning (W3, W3c) indicates to terminal T32 that the requested connection will harm a terminal belonging to the same local network as its own since its own code was used for encoding the first warning signal W3. The warning (W3, W3c) also indicates to terminal T32 that the sender of this warning is located in its immediate vincinity, since the power of the warning signals W3, W3c is at its highest level. In such a situation, terminal T32 should preferably give up, at least momentarily, its planned throughput increase.

If, however, only terminal T22 were to transmit a warning (W2, W2c) as shown at the bottom of the present Figure, this warning would indicate that the requested connection would only harm a terminal belonging to another local network since it used a different code for encoding the first warning signal W2, which terminal would furthermore not be located in the immediate vincinity of terminal T32 since the power of the warning signals W2, W2c is at a relatively low level. In such a case, terminal T32 may chose to carry out its planned throughput increase.

## Claims

1. Method for transmitting information in a telecommunication system comprising multiple local networks, which information is to be transmitted within at least one frame, method **characterized in that** it includes a section creation step for generating at least one section to be included in said frame, which section is splitted into multiple slots, each slot being allocated to a given terminal for enabling said terminal to transmit information in the form of a signal positioned within said slot.

2. Method for transmitting information as claimed in claim 1, further including a code definition step for defining at least one code to be allocated to a given local network, all terminals included in said given network being intended to use said code for encoding information to be transmitted by said terminals.

3. Method for transmitting information as claimed in any one of claims 1 or 2, further including a power setting step for ensuring that all terminals included in the telecommunication system use a same nominal transmitting power.

4. Method for allocating communication resources in a telecommunication system comprising multiple local networks, which method includes a connection step in the course of which communications are established between various terminals included in said system, a guaranteed minimal quality of service being associated to each communication, method further including a throughput increase anouncement step in the course of which at least one transmitting terminal anounces an imminent increase of throughput for the communication it supports, which anouncement is made by transmitting at least one frame section generated by said transmitting terminal by carrying out a section creation step as claimed in any one of claims 1 to 3.

5. Method for allocating communication resources as claimed in claim 4, **characterized in that** the throughput increase anouncement transmitted by the transmitting terminal includes a first and a second frame section generated by said transmitting terminal by carrying out two successive section creation steps, in order to transmit a first flagging signal encoded according to a code allocated to the local network to which said transmitting terminal belongs, and a second flagging signal encoded according to a common code shared by all local networks.

6. Method for allocating communication resources as claimed in any one of claims 4 or 5, **characterized in that** it includes a warning transmitting step in the course of which any third terminal having analysed said throughput increase anouncement and deduced from such an analysis that the related throughput increase imperils an ongoing communication involving said third terminal generates a warning frame section by carrying out at least one section creation step and transmitting a warning signal positioned in a slot allocated to the terminal from which the throughput increase anouncement originates.

7. Method for allocating communication resources as claimed in claim 6, **characterized in that** the warning includes a first and a second frame section generated by said third terminal by carrying out two successive section creation steps, in order to transmit a first warning signal encoded according to the code allocated to the local network to which said third terminal belongs, and a second warning signal encoded according to a common code shared by all local networks.

8. Method for allocating communication resources as claimed in claims 6 or 7, **characterized in that** it further includes a warning compiling step in the course of which all terminals to which a warning signal has been transmitted are identified and listed by order of nuisance in storage means included in the telecommunication system.

9. Method for allocating communication resources as claimed in claim 8, according to which the order of nuisance is determined by the number of times each terminal listed in the stirage means has been the object of a warning signal.

10. Method for allocating communication resources as claimed in any one of claims 4 to 9, **characterized in that** it further includes a throughput resetting step in the course of which a terminal having issued a predetermined number of successive throughput increase anouncements without having actually increased said throughput to a given desired value performs a computation of a new desired value lower than said given desired value.

11. Method for allocating communication resources as claimed in claim 10, according to which the computation of a new desired value is performed by reducing the given desired value by a predetermined ratio.

12. Signal intended to carry an information frame including at least one section splitted into multiple slots, each slot being allocated to a given terminal for enabling said terminal to transmit a throughput increase anouncement while carrying out a method for allocating communication resources as claimed in claims 4 or 5.
